(19) Europäisches Patentamt
European Patent Office
Office européen des brevets

(11) EP 1 216 262 B1

(12) EUROPÄISCHE PATENTSCHRIFT

(45) Veröffentlichungstag und Bekanntmachung des Hinweises auf die Patenterteilung:
**03.11.2004 Patentblatt 2004/45**

(21) Anmeldenummer: **00962418.0**

(22) Anmeldetag: **31.08.2000**

(51) Int Cl.[7]: **C08F 292/00**, C08F 2/44

(86) Internationale Anmeldenummer:
**PCT/EP2000/008510**

(87) Internationale Veröffentlichungsnummer:
**WO 2001/018081 (15.03.2001 Gazette 2001/11)**

(54) **VERFAHREN ZUR HERSTELLUNG EINER WÄSSRIGEN DISPERSION VON AUS POLYMERISAT UND FEINTEILIGEM ANORGANISCHEN FESTSTOFF AUFGEBAUTEN PARTIKELN**

METHOD FOR PRODUCING AN AQUEOUS DISPERSION OF PARTICLES MADE UP OF POLYMERISATE AND FINE INORGANIC SOLID MATERIAL

PROCEDE DE PREPARATION D'UNE DISPERSION AQUEUSE DE PARTICULES CONSTITUEES DE POLYMERE ET DE SUBSTANCE SOLIDE MINERALE A FINES PARTICULES

(84) Benannte Vertragsstaaten:
**AT BE CH CY DE DK ES FI FR GB GR IE IT LI LU MC NL PT SE**

(30) Priorität: **08.09.1999 DE 19942777**
**22.12.1999 DE 19961964**

(43) Veröffentlichungstag der Anmeldung:
**26.06.2002 Patentblatt 2002/26**

(73) Patentinhaber: **BASF AKTIENGESELLSCHAFT**
**67056 Ludwigshafen (DE)**

(72) Erfinder:
- **XUE, Zhijian**
**67059 Ludwigshafen (DE)**
- **WIESE, Harm**
**69121 Heidelberg (DE)**

(56) Entgegenhaltungen:
**EP-A- 0 572 128**
**EP-A- 0 606 930**
**GB-A- 2 250 020**
**US-A- 4 421 660**
**US-A- 4 608 401**
**US-A- 4 609 608**
**US-A- 5 431 956**
**US-A- 5 750 618**

EP 1 216 262 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur Herstellung einer wässrigen Dispersion von aus Polymerisat und feinteiligem anorganischen Feststoff aufgebauten Partikeln (Kompositpartikel), bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wässrigen Emulsionspolymerisation polymerisiert wird.

Ferner betrifft die Erfindung wässrige Dispersionen von Kompositpartikeln und deren Verwendung sowie Kompositpartikelpulver.

Wässrige Dispersionen von Kompositpartikeln sind allgemein bekannt. Es handelt sich um fluide Systeme, die als disperse Phase in wässrigem Dispergiermedium aus mehreren ineinander verschlungenen Polymerisatketten bestehenden Polymerisatknäuel, der sogenannten Polymermatrix, und feinteiligem anorganischen Feststoff aufgebaute Partikel in disperser Verteilung befindlich enthalten. Der Durchmesser der Kompositpartikel liegt häufig im Bereich von 50 nm bis 5000 nm.

Ebenso wie Polymerisatlösungen beim Verdampfen des Lösungsmittels und wässrige Polymerisatdispersionen beim Verdampfen des wässrigen Dispergiermediums, weisen wässrige Dispersionen von Kompositpartikeln das Potential zur Ausbildung von modifizierten, feinteiligen anorganischen Feststoff enthaltenden Polymerisatfilmen auf, weshalb sie insbesondere als modifizierte Bindemittel, z.B. für Anstrichfarben oder für Massen zum Beschichten von Leder, Papier oder Kunststofffolien von Interesse sind. Die aus wässrigen Dispersionen von Kompositpartikeln prinzipiell zugänglichen Kompositpartikelpulver sind darüber hinaus auch als Additive für Kunststoffe, Komponenten für Tonerformulierungen oder Zusatzstoffe in elektrophotographischen Anwendungen von Interesse.

Bei der Herstellung wässriger Dispersionen von Kompositpartikeln ist von folgendem Stand der Technik auszugehen.

Ein Verfahren zur Herstellung von mit Polymeren umhüllten anorganischen Partikeln mittels wässriger Emulsionspolymerisation wird in der US-A 3,544,500 offenbart. Bei diesem Verfahren werden die anorganischen Partikel vor der eigentlichen wässrigen Emulsions-Polymerisation mit wasserunlöslichen Polymeren beschichtet. Die Dispergierung der so in einem aufwendigen Prozeß behandelten anorganischen Partikel in wässrigem Medium erfolgt mittels spezieller Stabilisatoren.

Die EP-A 104 498 betrifft ein Verfahren zur Herstellung von polymerumhüllten Feststoffen. Kennzeichnend für das Verfahren ist, daß feinteilige Feststoffe, welche eine minimale Oberflächenladung aufweisen, mittels eines nichtionischen Schutzkolloids in wässrigem Polymersiationsmedium dispergiert und die zugesetzten ethylenisch ungesättigten Monomere mittels nichtionischer Polymerisationsinitiatoren polymerisiert werden.

Die US-A 4,421,660 offenbart ein Verfahren zur Herstellung von wässrigen Dispersionen, deren dispers vorliegenden Partikel anorganische Teilchen, welche vollständig von einer Polymerschale umgeben sind, aufweisen. Die Herstellung der wässrigen Dispersionen erfolgt durch radikalisch initiierte wässrige Emulsionspolymerisation hydrophober, ethylenisch ungesättigter Monomerer in Anwesenheit dispers verteilter anorganischer Teilchen.

Ein Verfahren zur Polymerisation von ethylenisch ungesättigten Monomeren in Anwesenheit von ladungsfreien anorganischen Feststoffpartikeln, welche mit nichtionischen Dispergiermitteln im wässrigen Reaktionsmedium stabilisiert sind, wird in der US-A 4,608,401 offenbart.

Die radikalisch initiierte wässrige Emulsionspolymerisation von Styrol in Anwesenheit von modifizierten Siliziumdioxidteilchen wird von Furusawa et al. im Journal of Colloid and Interface Science 1986, 109, Seiten 69 bis 76 beschrieben. Die Modifikation der kugelförmigen Siliziumdioxidteilchen mit einem mittleren Teilchendurchmesser von 190 nm erfolgt mittels Hydroxypropylcellulose.

Hergeth et al. (siehe Polymer, 1989, 30, Seiten 254 bis 258) beschreiben die radikalisch initiierte wässrige Emulsionspolymerisation von Methylmethacrylat bzw. Vinylacetat in Anwesenheit von aggregiertem feinteiligen Quarzpulver. Die Teilchengrößen des eingesetzten aggregierten Quarzpulvers liegen zwischen 1 $\mu$m und 35 $\mu$m.

Die GB-A 2 227 739 betrifft ein spezielles Emulsionspolymerisationsverfahren, bei dem ethylenisch ungesättigte Monomere in Anwesenheit dispergierter anorganischer Pulver, welche kationische Ladungen aufweisen, unter Anwendung von Ultraschallwellen polymerisiert werden. Die kationische Ladungen der dispergierten Feststoffteilchen werden durch Behandlung der Teilchen mit kationischen Agenzien erzeugt, wobei Aluminiumsalze bevorzugt sind. Die Schrift enthält jedoch keine Angaben bezüglich Teilchengrößen und Stabilität der wässrigen Feststoffdispersionen.

In der EP-A 505 230 wird die radikalisch wässrige Emulsionspolymerisation von ethylenisch ungesättigten Monomeren in Anwesenheit von oberflächenmodifizierten Siliziumdioxidpartikeln offenbart. Deren Funktionalisierung erfolgt mittels spezieller silanolgruppenhaltiger Acrylsäureester.

Die US-A 4,981,882 betrifft die Herstellung von Kompositpartikeln mittels eines speziellen Emulsionspolymerisationsverfahren. Verfahrenswesentlich sind feinteilige anorganische Teilchen, welche mittels basischer Dispergiermittel im wässrigen Medium dispergiert sind, das Behandeln dieser anorganischen Partikel mit ethylenisch ungesättigten Carbonsäuren und das Zugeben wenigstens einer amphiphilen Komponente zur Stabilisierung der Feststoffdispersion während der Emulsionspolymersiation. Die feinteiligen anorganischen Partikel weisen bevorzugt eine Teilchengröße zwischen 100 und 700 nm auf.

Haga et al. (siehe Die Angewandte Makromolekulare Chemie 1991, 189, Seiten 23 bis 34) beschreiben den Einfluß von Art und Konzentration der Monomeren, Art und Konzentration des Polymerisationsinitiators sowie den Einfluß des pH-Wertes auf die Polymerenbildung an in wässrigem Medium dispergierten Titandioxidteilchen. Hohe Ausbeuten bei der Verkapselung der Titandioxidteilchen werden erhalten, wenn die Polymerketten und die Titandioxidteilchen entgegengesetzte Ladungen aufweisen (vgl. o.g. Publikation, Kapitel 3.1 Polymerization behavior on encapsulation und Kapitel 4 Conclusion). Die Publikation enthält jedoch keine Angaben bezüglich der Teilchengröße und der Stabilität der Titandioxiddispersionen.

Long et al. beschreiben in Tianjin Daxue Xuebao 1991, 4, Seiten 10 bis 15 die dispergiermittelfreie Polymerisation von Methylmethacrylat in Anwesenheit von feinteiligen Siliziumdioxid- bzw. Aluminiumpartikeln. Gute Ausbeuten bei der Verkapselung der anorganischen Partikel werden erhalten, wenn die Endgruppen der Polymerketten und die anorganischen Teilchen entgegengesetzte Ladungen aufweisen.

Die EP-A 572 128 betrifft ein Herstellverfahren von Kompositpartikeln, bei dem die anorganischen Teilchen in wässrigem Medium bei einem bestimmten pH-Wert mit einer organischen Polysäure oder deren Salz behandelt werden und die daran anschließend durchgeführte radikalisch initiierte wässrige Emulsionspolymerisation von ethylenisch ungesättigten Monomeren bei einem pH-Wert $< 9$ erfolgt.

Bourgeat-Lami et al. (siehe Die Angewandte Makromolekulare Chemie 1996, 242, Seiten 105 bis 122) beschreiben die durch radikalisch wässrige Emulsionspolymerisation von Ethylacrylat in Gegenwart funktionalisierter und nicht funktionalisierter Siliziumdioxidteilchen zugänglichen Reaktionsprodukte. In den Polymerisationsexperimenten wurden generell anionisch geladene Siliziumdioxidteilchen, das nichtionische Nonylphenolethoxylat NP30 und das anionische Natriumdodecylsulfat (SDS) als Emulgatoren und Kaliumperoxodisulfat als radikalischer Polymerisationsinitiator verwendet. Die Autoren beschreiben die angefallenen Reaktionsprodukte als Aggregate, die mehr als ein Siliziumdioxidteilchen enthalten oder als Polymercluster, die sich auf der Siliziumdioxidoberfläche bilden.

Paulke et al. (siehe Synthesis Studies of Paramagnetic Polystyrene Latex Particles in Scientific and Clinical Applications of Magnetic Carriers, Seiten 69 bis 76, Plenum Press, New York, 1997) beschreiben drei prinzipielle Syntheserouten zur Herstellung von wässrigen eisenoxidhaltigen Polymerisatdispersionen. Aufgrund unzureichender Stabilität der wässrigen Feststoffdispersion ist für alle Syntheserouten die Verwendung von frisch gefälltem Eisen-(II/III)-oxid-Hydrat unabdingbare Voraussetzung. In Anwesenheit dieses frisch gefällten Eisen(II/III)-oxid-Hydrats erfolgt in der ersten Syntheseroute die radikalisch initiierte wässrige Emulsionspolymerisation von Styrol mit SDS als Emulgator und Kaliumperoxodisulfat als Polymerisationsinitiator. In der von den Autoren favorisierten zweiten Syntheseroute wird Styrol und Methacrylsäure in Anwesenheit des frisch gefällten Eisen(II/III)-oxid-Hydrats, des Emulgators N-Cetyl-N-trimethylammoniumbromid (CTAB) und spezieller oberflächenaktiver Polymerisationsinitiatoren (PEGA 600) in methanolisch/wässrigem Medium polymerisiert. In der dritten Syntheseroute werden Ethanol und Methoxyethanol als Polymerisationsmedium, Hydroxypropylcellulose als Emulgator, Benzoylperoxid als Polymerisationsinitiator und eine spezielle Eisen-(II/III)-oxid/Styrol-Mischung zur Herstellung von eisenoxidhaltigen Polymerdispersionen verwendet.

In der japanischen Offenlegungsschrift JP 11-209 622 wird ein Verfahren zur Herstellung von Kern/Schale-Partikeln offenbart, welche einen Kern aus einem Siliziumdioxidteilchen und eine Polymerschale aufweisen. Die Herstellung der Kern/Schale-Partikel erfolgt dergestalt, daß die in wässrigem Medium kolloidal vorliegenden Siliziumdioxidteilchen mit einem kationischen Vinylmonomeren oder einen kationischen Radikalinitiator vorbehandelt werden und daran anschließend eine radikalisch initiierte wässrige Emulsionspolymerisation mit ethylenisch ungesättigten Monomeren erfolgt.

Armes et al. (siehe Advanced Materials 1999, 11, Nr. 5, Seiten 408 bis 410) beschreiben die Herstellung von Siliziumdioxid-Kompositpartikeln, welche in einer emulgatorfreien, radikalisch initiierten wässrigen Emulsionspolymerisation mit speziellen olefinisch ungesättigten Monomeren in Anwesenheit von dispergierten Siliziumdioxidteilchen zugänglich sind. Als Voraussetzung zur Ausbildung von siliziumdioxidenthaltenden Polymerpartikeln wird eine starke Säure/Base-Wechselwirkung zwischen dem gebildeten Polymeren und den verwendeten sauren Siliziumdioxidteilchen postuliert. Siliziumdioxidenthaltende Polymerpartikel wurden mit Poly-4-vinylpyridin und Copolymeren von Styrol bzw. Methylmethacrylat mit 4-Vinylpyridin erhalten.

Aufgabe der vorliegenden Erfindung war es, angesichts des vorstehenden Standes der Technik ein anderes Verfahren zur Herstellung einer wässrigen Dispersion von Kompositpartikeln nach der Methode der radikalisch initiierten wässrigen Emulsionspolymerisation zur Verfügung zu stellen, welches die Nachteile der bekannten Verfahren nicht oder nur im verminderten Umfang aufweist.

Demgemäß wird ein Verfahren zur Herstellung einer wässrigen Dispersion von aus Polymerisat und feinteiligem anorganischen Feststoff aufgebauten Kompositpartikeln zur Verfügung gestellt, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wässrigen Emulsionspolymerisation polymerisiert wird, dadurch gekennzeichnet, daß

a) eine stabile wässrige Dispersion des wenigstens einen anorganischen Feststoffs eingesetzt wird, welche dadurch charakterisiert ist, daß sie bei einer Anfangsfeststoffkonzentration von ≥ 1 Gew.-%, bezogen auf die wässrige Dispersion des wenigstens einen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,

b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums am Beginn der Emulsionspolymerisation entspricht, eine von Null verschiedene elektrophoretische Mobilität zeigen
und

c) die radikalerzeugende Komponente des wenigstens einen radikalischen Polymerisationsinitiators und/oder die dispergierend wirkende Komponente des wenigstens einen Dispergiermittels wenigstens eine elektrische Ladung aufweisen, deren Vorzeichen entgegengesetzt dem Vorzeichen der elektrophoretischen Mobilität der dispergierten Feststoffteilchen des wenigstens einen Feststoffs ist, das diese in einer wässrigen Standardkaliumchlorid-Lösung bei einem pH-Wert aufweisen, der dem pH-Wert des wässrigen Reaktionsmediums am Beginn der Emulsionspolymerisation entspricht.

Für das erfindungsgemäße Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen Feststoffs, noch eine Stunde nach ihrer Herstellung mehr als 90 Gew.-% des ursprünglich dispergierten Feststoffes in dispergierter Form enthalten und deren dispergierten Feststoffteilchen einen gewichtsmittleren Durchmesser ≤ 100 nm aufweisen und darüber hinaus bei einem pH-Wert, der dem pH-Wert des wässrigen Reaktionsmediums am Beginn der Emulsionspolymerisation entspricht, eine von Null verschiedene elektrophoretische Mobilität zeigen.

Als erfindungsgemäß einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammonium-phosphate, wie Magnesiumammoniumphosphat, Zinkammoniumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisenorthosilikate, Magnesiumorthosilikat, Zinkorthosilikat, Zirkoniumorthosilikate, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH (Marke der Südchemie AG), Saponit® SKS-20 und Hektorit® SKS 21 (Marken der Hoechst AG) sowie Laponite® RD und Laponite® GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als wenigstens ein feinteiliger anorganischer Feststoff lassen sich ferner alle vorgenannten Verbindungen einsetzen, deren Oberflächen mit polymeren Verbindungen oder anorganischen Materialien modifiziert wurden.

Als feinteilige anorganische Feststoffe sind solche besonders geeignet, deren Löslichkeit in Wasser bei 20°C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphosphat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid.

Vorteilhaft können auch die kommerziell verfügbaren Verbindungen der Aerosil®-, Levasil®-, Ludox®-, Nyacol®- und Bindzil®-Marken (Siliziumdioxid), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) im erfindungsgemäßen Verfahren eingesetzt werden.

Die im erfindungsgemäßen Verfahren einsetzbaren feinteiligen anorganischen Feststoffe sind so beschaffen, daß die im wässrigen Reaktionsmedium dispergierten Feststoffteilchen einen gewichtsmittleren Teilchendurchmesser von ≤ 100 nm aufweisen. Erfolgreich werden solche feinteiligen anorganischen Feststoffe eingesetzt, deren dispergierten Teilchen einen gewichtsmittleren Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Die Ermittlung der gewichtsmittleren Teilchendurchmesser kann beispielsweise über die Methode der Analytischen Ultrazentrifuge erfolgen (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt durch Eindispergieren des feinteiligen anorganischen Feststoffs in das wässrige Medium. Abhängig vom Herstellweg der Feststoffe gelingt dies entweder direkt, beispielsweise beim gefälltem oder pyrogenem Siliziumdioxid, Aluminiumoxid etc. oder durch Zusatz geeigneter Hilfsstoffe, wie beispielsweise Dispergiermittel.

In der Regel werden im Rahmen des erfindungsgemäßen Verfahrens Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikeldispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke- und Gelatinederivate oder Acrylsäure, Methacrylsäure, Maleinsäureanhydrid, 2-Acrylamido-2-methylpropansulfonsäure und/oder Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-vinylpyridin, Acrylamid, Methacrylamid, amingruppentragende Acrylate, Methacrylate, Acrylamide und/oder Methacrylamide enthaltende Homo- und Copolymerisate sowie deren am Stickstoff protonierten und/oder alkylierten Derivate. Beispiele hierfür sind N-Dimethylaminoethylacrylat, N-Diethylaminoethylacrylat, N-Dimethylaminoethylmethacrylat, N-(3-Dimethylaminopropyl)methacrylamid, tert.-Butylaminoethylmethacrylat, 2-N-Benzyldimethylammoniumethylmethacrylsäureesterchlorid, 2-N-Trimethylammoniumethylmethacrylsäureesterchlorid, 2-N-Benzyldimethylammoniumethylacrylsäureesterchlorid und 1-Hydroxyethylimidazolin-2-onmethacrylat. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420. Erfindungsgemäß besonders geeignet sind anionische Schutzkolloide, d.h. Schutzkolloide, deren dispergierend wirkende Komponente wenigstens eine negative elektrische Ladung aufweist, wie Alkalimetallsalze von Polyacrylsäuren und Polymethacrylsäuren, Acrylsäure, Methacrylsäure, 2-Acrylamido-2-methylpropansulfonsäure, Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol sowie kationische Schutzkolloide, d.h. Schutzkolloide, deren dispergierend wirkende Komponente wenigstens eine positive elektrische Ladung aufweist, wie beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate.

Selbstverständlich können auch Gemische aus Emulgatoren und/oder Schutzkolloiden verwendet werden. Häufig werden als Dispergiermittel ausschließlich Emulgatoren eingesetzt, deren relative Molekulargewichte im Unterschied zu den Schutzkolloiden üblicherweise unter 1500 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 50; Alkylrest: $C_8$ bis $C_{36}$).

Übliche anionische Emulgatoren, d.h. Emulgatoren, deren dispergierend wirkende Komponente wenigstens eine negative elektrische Ladung aufweist, sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere grenzflächenaktive Substanzen, deren dispergierend wirkende Komponente wenigstens eine negative elektrische Ladung aufweist, haben sich ferner Verbindungen der allgemeinen Formel I

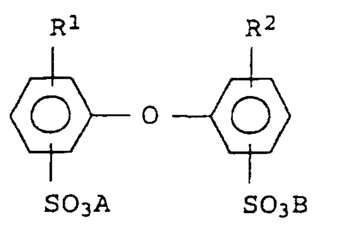

(I),

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4,269,749, und im Handel erhältlich.

Geeignete kationenaktive Emulgatoren, d.h. Emulgatoren, deren dispergierend wirkende Komponente wenigstens eine positive elektrische Ladung aufweist, sind in der Regel einen $C_6$- bis $C_{18}$-Alkyl-, Aralkyl- oder Heterocyclylrest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden,

Chinoliniumsalze, Isochinoliniumsalze, Tropyliumsalze, Sulfoniumsalze und Phosphoniumsalze. Darüber hinaus können auch Polyglykoletherderivate in saurem Milieu aufgrund der Bildung einer Oxoniumstruktur wenigstens eine positive elektrische Ladung tragen. Beispielhaft genannt seien Dodecylammoniumacetat oder das entsprechende Hydrochlorid, die verschiedenen Paraffinsäuretrimethylammoniumethylester, N-Cetylpyridiniumchlorid, N-Laurylpyridiniumsulfat sowie N-Cetyl-trimethylammoniumbromid, N-Dodecyl-trimethylammoniumbromid, N-Octyl-trimethlyammoniumbromid, N-Distearyl-dimethyl-ammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

In der Regel werden 0,05 bis 20 Gew.-%, häufig 0,1 bis 5 Gew.-%, oft 0,2 bis 3 Gew.-% an Dispergiermittel, jeweils bezogen auf das Gesamtgewicht des wenigstens einen feinteiligen anorganischen Feststoffs und dem zur Polymerisation eingesetzten wenigstens einen Monomeren, verwendet. Dabei kann eine Teil- oder die Gesamtmenge des im Verfahren verwendeten wenigstens einen Dispergiermittels in der wässrigen Feststoffdispersion vorgelegt und die gegebenfalls verbliebene Restmenge im Laufe der radikalisch initiierten wässrigen Emulsionspolymerisation kontinuierlich oder diskontinuierlich zugegeben werden. Es ist jedoch auch möglich, gegebenenfalls lediglich eine Teilmenge des wenigstens einen Dispergiermittels, in der wässrigen Feststoffdispersion vorzulegen und die Gesamtmenge bzw. die gegebenenfalls verbliebene Restmenge des wenigstens einen Dispergiermittels während der radikalischen Emulsionspolymerisation kontinuierlich oder diskontinuierlich zuzugeben.

Selbstverständlich eignen sich die vorgenannten Dispergiermittel ganz generell zur Durchführung des erfindungsgemäßen Verfahrens. Das erfindungsgemäße Verfahren umfaßt aber auch die Herstellung wässriger Kompositpartikeldispersionen, welche selbstemulgierende Polymerisate, bei denen Monomere, die ionische Gruppen aufweisen, aufgrund einer Abstoßung von Ladungen gleichen Vorzeichens die Stabilisierung bewirken, enthalten. In diesen Fällen braucht in der Regel kein zusätzliches Dispergiermittel eingesetzt werden. Darüber hinaus können auch die anorganischen Feststoffteilchen aufgrund ihrer einheitlichen Ladung stabilisierend auf die wässrige Kompositpartikeldispersion wirken.

Erfindungsgemäß sind jedoch nur solche Feststoffe geeignet, deren wässrige Feststoffdispersion bei einer Anfangsfeststoffkonzentration von ≥ 1 Gew.-%, bezogen auf die wässrige Dispersion des Feststoff, noch eine Stunde nach ihrer Herstellung mehr als 90 Gew.-% des ursprünglich dispergierten Feststoffes in dispergierter Form enthält und deren dispergierten Feststoffteilchen einen gewichtsmittleren Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 1 Gew.-%, ≥ 3 Gew.-% oder ≥ 5 Gew.-%, jeweils bezogen auf die wässrige Dispersion des Feststoff und alle Werte dazwischen eingesetzt werden.

Erfindungswesentlich ist, daß die dispergierten Feststoffteilchen in einer wässrigen Standardkaliumchlorid-Lösung bei einem pH-Wert, der dem pH-Wert des wässrigen Reaktionsmediums am Beginn der Emulsionspolymerisation entspricht, eine von Null verschiedene elekrophoretische Mobilität zeigen. Unter wässrigem Reaktionsmedium am Beginn der Emulsionspolymerisation wird in dieser Schrift das wässrige Reaktionsmedium verstanden, das unmittelbar vor Zugabe des wenigstens einen radikalischen Polymerisationsinitiators vorliegt. Die pH-Wertbestimmung erfolgt bei 20°C und 1 bar (absolut) mit handelsüblichen pH-Meßgeräten. Abhängig vom durchgeführten Verfahren erfolgt die pH-Messung daher an einer wässrigen Dispersion, welche lediglich den wenigstens einen anorganischen Feststoff oder zusätzlich das wenigstens eine Dispergiermittel und/oder zusätzlich die zur Emulsionspolymerisation eingesetzten Monomeren sowie gegebenenfalls weitere Hilfsstoffe enthält.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, beispielsweise dem Zetasizer 3000 der Fa. Malvern Instruments Ltd., bei 20°C und 1 bar (absolut) bestimmt. Hierzu wird die wässrige Feststoffteilchendispersion mit einer pH-neutralen 10 millimolaren (mM) Kaliumchlorid-Lösung (Standardkaliumchlorid-Lösung) soweit verdünnt, daß die Feststoffteilchen-Konzentration ca. 50 bis 100 mg/l beträgt. Die Einstellung der Meßprobe auf den pH-Wert, den das wässrige Reaktionsmedium am Beginn der Emulsionspolymerisation aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Werden oberflächenmodifizierte Feststoffteilchen, wie sie beispielsweise im Stand der Technik beschrieben

sind, eingesetzt, so wird die Bestimmung der elektrophoretischen Mobilität mit diesen oberflächenmodifizierten Teilchen durchgeführt. Ist dagegen ein feinteiliger anorganischer Feststoff nur mit Hilfe von Dispergiermitteln dispergierbar, so muß die Bestimmung der elektrophoretischen Mobilität mit geeigneten nichtionischen Dispergiermitteln erfolgen, und zwar unabhängig davon, ob im erfindungsgemäßen Verfahren tatsächlich kationische oder anionische Dispergiermittel eingesetzt werden. Dies ist deshalb erforderlich, weil sich die ionischen Dispergiermittel auf den dispergierten Feststoffteilchen adsorbieren und so deren elektrophoretische Mobilität verändern bzw. umkehren können.

Ein geeigneter Parameter, um die elektrophoretische Mobilität von dispergierten Feststoffteilchen in einem gewissen Umfang zu beeinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das erfindungsgemäße Verfahren geeigneter pH-Bereich ist der, innerhalb dessen sich eine radikalisch initiierte wässrige Emulsionspolymerisation durchführen läßt. Dieser pH-Bereich liegt in der Regel bei pH 1 bis 12, häufig bei pH 1,5 bis 11 und oft bei pH 2 bis 10.

Die Durchführung einer radikalisch initiierten wässrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seite 659 ff., 1987; D.C. Blackley, in High Polymer Latices, Vol. 1, Seite 35 ff., 1966; H. Warson, The Applications of Synthetic Resin Emulsions, Kapitel 5, Seite 246 ff., 1972; D. Diederich, Chemie in unserer Zeit 1990, 24, Seiten 135 bis 142; Emulsion Polymerisation, Interscience Publishers, New York, 1965; DE-A 40 03 422 und Dispersionen synthetischer Hochpolymerer, F. Hölscher, Springer-Verlag, Berlin, 1969]. Sie erfolgt üblicherweise so, daß man das wenigstens eine ethylenisch ungesättigte Monomere, häufig unter Mitverwendung von Dispergiermitteln, in wässrigem Medium dispers verteilt und mittels wenigstens eines radikalischen Polymerisationsinitiators polymerisiert. Von dieser Verfahrensweise unterscheidet sich das erfindungsgemäße Verfahren lediglich durch ein zusätzliches Beisein von wenigstens einem feinteiligen anorganischen Feststoff, welcher eine von Null verschiedene elektrophoretische Mobilität aufweist und einer sich daraus ergebenden speziellen Dispergiermittel- und/oder Polymerisationsinitiatoren-Kombination.

Als wenigstens eine ethylenisch ungesättigte Gruppe aufweisende Monomere kommen für das erfindungsgemäße Verfahren u.a. insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und - 2-ethylhexylester, Maleinsäuredimethylester oder Maleinsäure-din-butylester, Nitrile α,β-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von mehr als 50 Gew.-% auf sich vereinen. In aller Regel weisen diese Monomeren in Wasser bei Normalbedingungen (20°C, 1 bar (absolut)) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon.

Im Normalfall werden die vorgenannten Monomeren lediglich als modifizierende Monomere in Mengen, bezogen auf die Gesamtmenge der zu polymerisierenden Monomeren, von weniger als 50 Gew.-%, in der Regel 0,5 bis 20 Gew.-%, vorzugsweise 1 bis 10 Gew.-% einpolymerisiert.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, häufig in Mengen von 0,5 bis 10 Gew.-% einpolymerisiert.

Beim erfindungsgemäßen Verfahren beträgt der Gewichtsanteil des wenigstens einen ethylenisch ungesättigten Monomeren, bezogen auf das Gesamtgewicht des wenigstens einen feinteiligen anorganischen Feststoffs und dem zur Polymerisation eingesetzten wenigstens einen ethylenisch ungesättigten Monomeren, in der Regel zwischen 10 und 99 Gew.-%, häufig zwischen 25 und 90 Gew.-% und oft zwischen 40 und 80 Gew.-%. Erfindungsgemäß kann eine Teil- oder die Gesamtmenge des wenigstens einen Monomeren gemeinsam mit dem wenigstens einen feinteiligen anorganischen Feststoff im Reaktionsmedium vorgelegt und die gegebenenfalls verbliebene Restmenge nach Maßgabe des Verbrauchs während der radikalischen Emulsionspolymerisation kontinuierlich oder diskontinuierlich zugegeben werden. Es ist aber auch möglich, gegebenenfalls lediglich eine Teilmenge des wenigstens einen Monomeren in der wässrigen Feststoffdispersion vorzulegen und dann während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Als wenigstens ein radikalischer Polymerisationsinitiator kommen für die erfindungsgemäße radikalische wässrige Emulsiosnpolymerisation alle diejenigen in Betracht, die in der Lage sind, eine radikalische wässrige Emulsionspolymerisation im Beisein des wenigstens eines feinteiligen anorganischen Feststoffes auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, beispielsweise die Mono- und Di-Natrium-, - Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis (2,4-dimethylvaleronitril) und 2,2'-Azobis(amidinopropyl)-dihydrochlorid (AIBA, entspricht dem Verkaufsprodukt V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/ oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-/Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge der zu polymerisierenden Monomeren, 0,1 bis 3 Gew.-%.

Als wenigstens ein radikalischer Polymerisationsinitiator, dessen radikalerzeugende Komponente wenigstens eine negative elektrische Ladung aufweist, seien beispielhaft Peroxodisulfate, wie die Mono- oder Di-Alkalimetall- oder Ammoniumsalze der Peroxodischwefelsäure, beispielsweise die Mono- und Di-Natrium-, -Kaliumoder Ammoniumsalze sowie Wasserstoffperoxid in alkalischem Medium genannt.

Als wenigstens ein radikalischer Polymerisationsinitiator, dessen radikalerzeugende Komponente wenigstens eine positive elektrische Ladung aufweist, sei beispielhaft AIBA genannt.

Erfindungsgemäß kann eine Teil- oder die Gesamtmenge des wenigstens einen radikalischen Polymerisationsinitiators gemeinsam mit dem wenigstens einen feinteiligen anorganischen Feststoff im Reaktionsmedium vorgelegt und die gegebenenfalls verbliebene Restmenge nach Maßgabe des Verbrauchs während der radikalischen Emulsionspolymerisation kontinuierlich oder diskontinuierlich zugegeben werden. Es ist aber auch möglich, gegebenenfalls lediglich eine Teilmenge des wenigstens einen radikalischen Polymerisationsinitiators in der wässrigen Feststoffdispersion vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Als Reaktionstemperatur für die erfindungsgemäße radikalische wässrige Emulsionspolymerisation im Beisein des wenigstens einen feinteiligen anorganischen Feststoffes kommt der gesamte Bereich von 0 bis 170°C in Betracht. Dabei werden in der Regel Temperaturen von 50 bis 120°C, häufig 60 bis 110°C und oft ≥ 70 bis 100°C angewendet. Die erfindungsgemäße radikalische wässrige Emulsionspolymerisation kann bei einem Druck kleiner, gleich oder größer 1 bar (absolut) durchgeführt werden, so daß die Polymerisationstemperatur 100°C übersteigen und bis zu 170°C betragen kann. Vorzugsweise werden leichtflüchtige Monomere wie Ethylen, Butadien oder Vinylchlorid

unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emulsionspolymerisation bei 1 bar (absolut) unter Inertgasatmosphäre, wie beispielsweise unter Stickstoff oder Argon durchgeführt.

Das wässrige Reaktionsmedium kann prinzipiell auch wasserlösliche organische Lösungsmittel, wie beispielsweise Methanol, Ethanol, Isopropanol, Butanole, Pentanole, etc. umfassen. Bevorzugt wird das erfindungsgemäße Verfahren jedoch in Abwesenheit solcher Lösungsmittel durchgeführt.

Erfindungswesentlich ist, daß die dispergierten Feststoffteilchen des wenigstens einen anorganischen Feststoffes unter den oben beschriebenen Bedingungen eine von Null verschiedene elektrophoretische Mobilität aufweisen, deren Vorzeichen entgegengesetzt der wenigstens einen elektrischen Ladung der radikalerzeugenden Komponente des wenigstens einen radikalischen Polymerisationsinitiators und/oder der dispergierend wirkenden Komponente des wenigstens einen Dispergiermittels ist. Liegt demnach wenigstens ein feinteiliger anorganischer Feststoff vor, dessen dispergierte Feststoffteilchen eine elektrophoretische Mobilität mit negativem Vorzeichen aufweisen, so erfolgt die erfindungsgemäße radikalische wässrige Emulsionspolymerisation mit wenigstens einem Dispergiermittel, dessen dispergierend wirkende Komponente wenigstens eine positive Ladung aufweist und/oder mit wenigstens einem radikalischen Polymerisationsinitiator, dessen radikalerzeugende Komponente eine positive elektrische Ladung trägt. Liegt dagegen im erfindungsgemäßen Verfahren wenigstens ein feinteiliger anorganischer Feststoff vor, dessen dispergierte Feststoffteilchen eine elektrophoretische Mobilität mit positivem Vorzeichen aufweisen, so erfolgt die erfindungsgemäße radikalische wässrige Emulsionspolymerisation mit wenigstens einem Dispergiermittel, dessen dispergierend wirkende Komponente wenigstens eine negative Ladung trägt und/oder mit wenigstens einem radikalischen Polymerisationsinitiator, dessen radikalerzeugende Komponente eine negative elektrische Ladung aufweist.

Das erfindungsgemäße Verfahren kann beispielsweise so ausgeübt werden, daß man eine stabile wässrige Dispersion des wenigstens einen feinteiligen anorganischen Feststoffs, enthaltend entweder eine Teil- oder die Gesamtmenge des benötigten Wassers, des benötigten wenigstens einen Dispergiermittels, des wenigstens einen Polymerisationsinitiators und/oder des wenigstens einen ethylenisch ungesättigten Monomeren sowie der gegebenenfalls weiteren üblichen Hilfs- und Zusatzstoffe in einem Reaktionsbehälter vorlegt und den Inhalt des Reaktionsbehälters auf Reaktionstemperatur aufheizt. Bei dieser Temperatur werden unter Rühren die gegebenenfalls verbliebenen Restmengen des Wassers, des wenigstens einen Dispergiermittels, des wenigstens einen Polymerisationsinitiators und/oder des wenigstens einen ethylenisch ungesättigten Monomeren sowie der gegebenenfalls weiteren üblichen Hilfs- und Zusatzstoffe kontinuierlich oder diskontinuierlich zugesetzt und anschließend gegebenenfalls noch weiter auf Reaktionstemperatur gehalten.

Das erfindungsgemäße Verfahren kann aber auch so durchgeführt werden, daß man eine stabile wässrige Dispersion des wenigstens einen feinteiligen anorganischen Feststoffs, enthaltend entweder eine Teil- oder die Gesamtmenge des benötigten Wassers, des wenigstens einen Dispergiermittels und/oder der gegebenenfalls weiteren üblichen Hilfs- und Zusatzstoffe und gegebenenfalls eine Teilmenge des wenigstens einen ethylenisch ungesättigten Monomeren und des wenigstens einen Polymerisationsinitiators in einem Reaktionsbehälter vorlegt und den Inhalt des Reaktionsbehälters auf Reaktionstemperatur aufheizt. Bei dieser Temperatur wird unter Rühren die Gesamt- oder die gegebenenfalls verbliebene Restmenge des wenigstens einen ethylenisch ungesättigten Monomeren und des wenigstens einen Polymerisationsinitiators sowie die gegebenenfalls verbliebenen Restmengen des Wassers, des wenigstens einen Dispergiermittels und/oder der gegebenenfalls weiteren üblichen Hilfs- und Zusatzstoffe kontinuierlich oder diskontinuierlich zugesetzt und anschließend gegebenenfalls weiter auf Reaktionstemperatur gehalten.

Die erfindungsgemäß zugänglichen Kompositpartikel besitzen in der Regel Teilchendurchmesser von ≤ 5000 nm, häufig ≤ 1000 nm und oft ≤ 400 nm. Die Bestimmung der Teilchendurchmesser erfolgt üblicherweise durch transmissionselektronenmikroskopische Untersuchungen (vgl. z.B. L. Reimer, Transmission Electron Microscopy, Springer-Verlag, Berlin, Heidelberg, 1989; D.C. Joy, The Basic Principles of EELS in Principles of Analytical Electron Microskopy, herausgegeben von D.C. Joy, A.D. Romig, Jr. und J.I. Goldstein, Plenum Press, New York, 1986; L.C. Sawyer und D. T. Grupp, Polymer Microscopy, Chapman and Hall, London, 1987).

Die nach dem erfindungsgemäßen Verfahren erhältlichen Kompositpartikel können unterschiedliche Strukturen aufweisen. Häufig werden Kompositpartikel mit himbeerförmigem Aufbau erhalten. Die erfindungsgemäßen Kompositpartikel können ein oder mehrere der feinteiligen Feststoffteilchen enthalten. Die feinteiligen Feststoffteilchen können vollständig von der Polymermatrix umhüllt sein. Es ist aber auch möglich, daß ein Teil der feinteiligen Feststoffteilchen von der Polymermatrix umhüllt ist, während ein anderer Teil auf der Oberfläche der Polymermatrix angeordnet ist. Selbstverständlich ist es auch möglich, daß ein Großteil der feinteiligen Feststoffteilchen auf der Oberfläche der Polymermatrix gebunden ist. Bevorzugt sind ≥ 50 Gew.-% oder ≥ 60 Gew.-%, häufig ≥ 70 Gew.-% oder ≥ 80 Gew.-% und oft ≥ 85 Gew.-% oder ≥ 90 Gew.-% der feinteiligen Feststoffteilchen, jeweils bezogen auf die Gesamtmenge der in den Kompositpartikeln enthaltenen feinteiligen Feststoffteilchen, auf der Oberfläche der Polymermatrix gebunden. Zu beachten ist, daß es in Einzelfällen, abhängig von der Feststoffkonzentration der dispergierten Kompositpartikel, auch zu einer Teilagglomeration der Kompositpartikel kommen kann.

Selbstverständlich können die nach Abschluß der Hauptpolymerisationsreaktion in der wässrigen Dispersion der Kompositpartikel verbliebenen Monomerenrestmengen durch Dampf- und/oder Inertgasstrippung und/oder durch chemische Desodorierung, wie sie beispielsweise in den Schriften DE-A 4 419 518, EP-A 767 180 oder DE-A 3 834 734 beschrieben sind, entfernt werden, ohne daß sich die Eigenschaften der wässrigen Kompositpartikeldispersion nachteilig verändern.

Wässrige Dispersionen von Kompositpartikeln, welche nach dem beschriebenen erfindungsgemäßen Verfahren hergestellt werden, eignen sich als Rohstoffe zur Herstellung von Klebstoffen, wie beispielsweise Haftklebstoffen, Bauklebstoffen oder Industrieklebstoffen, Bindemitteln, wie beispielsweise für die Papierstreicherei, Dispersionsfarben oder für Druckfarben und Drucklacke zum Bedrucken von Kunststofffolien, zur Herstellung von Vliesstoffen sowie zur Herstellung von Schutzschichten und Wasserdampfsperren, wie beispielsweise bei der Grundierung. Ferner lassen sich die dem erfindungsgemäßen Verfahren zugänglichen Kompositpartikeldispersionen auch zur Modifizierung von Zement- und Mörtelformulierungen nutzen. Die nach dem erfindungsgemäßen Verfahren zugänglichen Kompositpartikel lassen sich prinzipiell auch in der medizinischen Diagnostik sowie in anderen medizinischen Anwendungen einsetzen (vgl. z.B. K. Mosbach und L. Andersson, Nature, 1977, 270, Seiten 259 bis 261; P.L. Kronick, Science 1978, 200, Seiten 1074 bis 1076; US-A 4,157,323). Darüber hinaus lassen sich die Kompositpartikel auch als Katalysatoren in verschiedenen wässrigen Dispersionssystemen einsetzen.

Auch sei festgehalten, daß die erfindungsgemäß erhältlichen wässrigen Dispersionen von Kompositpartikeln in einfacher Weise zu redispergierbaren Kompositpartikelpulvern trockenbar sind (z.B. Gefriertrocknung oder Sprühtrocknung). Dies gilt insbesondere dann, wenn die Glasübergangstemperatur der Polymermatrix der erfindungsgemäß zugänglichen Kompositpartikel ≥ 50°C, vorzugsweise ≥ 60°C, besonders bevorzugt ≥ 70°C, ganz besonders bevorzugt ≥ 80°C und insbesondere bevorzugt ≥ 90°C bzw. ≥ 100°C beträgt. Die Kompositpartikelpulver eignen sich u.a. als Additive für Kunststoffe, Komponenten für Tonerformulierungen oder Zusatzstoffe in elektrophotographischen Anwendungen.

Beispiele

Für die folgenden Beispiele wurde als feinteiliger anorganischer Feststoff Siliziumdioxid, Zinn-(IV)-oxid, Yttrium-(III)-oxid und Cer-(IV)-oxid verwendet. Exemplarisch eingesetzt wurden die kommerziell verfügbaren Siliziumdioxidsole Levasil® 200 S (15 nm) der Firma Bayer AG, Nyacol® 2040 (20 nm) und Nyacol® 830 (10 nm) der Firma Akzo-Nobel sowie Ludox® HS30 (12 nm) der Firma Dupont. Ebenfalls eingesetzt wurden Nyacol® SN15 [Zinn-(IV)-oxid] (10 bis 15 nm), Nyacol® YTTRIA [Yttrium-(III)-oxid] (10 nm) und Nyacol® CEO2 {ACT} [Cer-(IV)-oxid] (10 bis 20 nm). Die in runden Klammern angegebenen Werte entsprechen den Durchmessern der jeweiligen anorganischen Feststoffteilchen nach Herstellerangaben.

Beispiel 1

In einem 500 ml Vierhalskolben, ausgerüstet mit einem Rückflußkühler, einem Thermometer, einem mechanischem Rührer sowie einer Dosiervorrichtung, wurden unter Stickstoffatmosphäre bei 20°C und 1 bar (absolut) 90 g entionisiertes und sauerstofffreies Wasser sowie 0,08 g CTAB vorgelegt und unter Rühren (250 Umdrehungen pro Minute) zuerst 20 g Nyacol® 2040 (mit einem Siliziumdioxidfeststoffgehalt von 40 Gew.-%) und dann 5 g Styrol zugegeben und anschließend auf eine Reaktionstemperatur von 75°C aufgeheizt. Der pH-Wert dieses wässrigen Reaktionsmediums, gemessen bei 20°C und 1 bar (absolut), betrug 8,6.

Dem gerührten Reaktionsmedium wurden bei Reaktionstemperatur 0,1 g Ammoniumperoxodisulfat, gelöst in 10 g entionisiertem und sauerstofffreiem Wasser zugesetzt. Die gerührte Reaktionsmischung wurde noch 3,5 Stunden auf Reaktionstemperatur gehalten und anschließend auf Raumtemperatur abgekühlt.

Die so erhaltene Kompositpartikeldispersion wies einen Feststoffgehalt von 12,2 Gew.-%, bezogen auf das Gesamtgewicht der wässrigen Kompositpartikeldispersion, auf. Transmissionselektronenmikroskopische Untersuchungen (vgl. z.B. L. Reimer, Transmission Electron Microscopy, Springer-Verlag, Berlin, Heidelberg, 1989; D.C. Joy, The Basic Principles of EELS in Principles of Analytical Electron Microskopy, herausgegeben von D.C. Joy, A.D. Romig, Jr. und J.I. Goldstein, Plenum Press, New York, 1986; L.C. Sawyer und D.T. Grupp, Polymer Microscopy, Chapman and Hall, London, 1987) wiesen himbeerförmige Kompositpartikel mit einem Durchmesser von etwa 100 nm auf. Freie Siliziumdioxidteilchen ließen sich praktisch nicht nachweisen.

Die Vorzeichenbestimmung der elektrophoretischen Mobilität erfolgte bei den feinteiligen anorganischen Feststoffen generell mittels des Zetasizer 3000 der Fa. Malvern Instruments Ltd.. Hierzu verdünnte man die feinteilige anorganische Feststoffdispersion mit pH-neutraler 10 mM Kaliumchlorid-Lösung (Standardkaliumchlorid-Lösung) soweit, daß deren Feststoffteilchenkonzentration zwischen 50 und 100 mg pro Liter lag. Mittels verdünnter Salzsäure oder verdünnter Natronlauge stellte man den pH-Wert ein, den das wässrige Reaktionsmedium unmittelbar vor Zugabe des Polymerisationsinitiators aufwies.

Mittels verdünnter Salzsäure stellte man bei der auf 60 mg/l Siliziumdioxidfeststoffgehalt verdünnten Nyacol® 2040-Dispersion einen pH-Wert von 8,6 ein. Die elektrophoretische Mobilität der Siliziumdioxidteilchen in Nyacol® 2040 wies ein negatives Vorzeichen auf.

Der Feststoffgehalt wurde generell bestimmt, indem ca. 1 g der Kompositpartikeldispersion in einem offenen Aluminiumtiegel mit einem Innendurchmesser von ca. 3 cm in einem Trockenschrank 2 Stunden bei 150°C getrocknet wurde. Zur Bestimmung des Feststoffgehalts wurden jeweils zwei separate Messungen durchgeführt und der entsprechende Mittelwert gebildet.

Beispiel 2

Unter Stickstoffatmosphäre wurden bei 20°C und 1 bar (absolut) 60 g entionisiertes und sauerstofffreies Wasser sowie 1,5 g 1 M Salzsäure in einem 500 ml Vierhalskolben vorgelegt und unter Rühren (250 Umdrehungen pro Minute) 20 g Nyacol® 2040 zugegeben. Anschließend stellte man die wässrige Phase mit 1,62 g 1 M Salzsäure auf pH 2,5 ein und füllte sie mit Wasser, das mit 1 M Salzsäure auf pH 2,5 eingestellt worden war, auf 100 g auf. Danach heizte man das Reaktionsgemisch auf eine Reaktionstemperatur von 75°C auf. Der pH-Wert dieser wässrigen Phase, gemessen bei Raumtemperatur, betrug 2,5,

Parallel stellte man eine wässrige Emulsion, bestehend aus 20 g Styrol, 80 g entionisiertem und sauerstofffreiem Wasser sowie 0,2 g CTAB her (Zulauf 1). Eine Initiatorlösung wurde aus 0,45 g Ammoniumperoxodisulfat und 44,55 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so erhaltene Kompositpartikeldispersion wies einen Feststoffgehalt von 10,4 Gew.-%, bezogen auf das Gesamtgewicht der wässrigen Kompositpartikeldispersion, auf. Das Vorliegen von himbeerförmigen Kompositpartikeln mit einem Durchmesser von etwa 160 bis 240 nm wurde mittels transmissionselektronenmikroskopischer Untersuchungen nachgewiesen. Freie Siliziumdioxidteilchen ließen sich nur in Spuren nachweisen.

Die Siliziumdioxidteilchen wiesen bei pH 2,5 eine elektrophoretische Mobilität mit negativem Vorzeichen auf.

Beispiel 3

Die Arbeitsweise von Beispiel 2 wurde wiederholt mit der Ausnahme, daß beim wässrigen Reaktionsmedium ein pH-Wert von 5 eingestellt wurde. Die Vorlage stellte man dabei auf folgende Weise her: 60 g entionisiertes und sauerstofffreies Wasser sowie 1,5 g 1 M Salzsäure wurden vorgelegt und unter Rühren (250 Umdrehungen pro Minute) 20 g Nyacol® 2040 zugegeben. Anschließend stellte man die wässrige Phase mit 1,01 g 1 M Salzsäure auf pH 5 ein und füllte sie mit Wasser, das mit 1 M Salzsäure auf pH 5 eingestellt worden war, auf 100 g auf.

Die so erhaltene Kompositpartikeldispersion wies einen Feststoffgehalt von 11,6 Gew.-%, bezogen auf das Gesamtgewicht der wässrigen Kompositpartikeldispersion, auf. Transmissionselektronenmikroskopische Untersuchungen belegen das Vorliegen von himbeerförmigen Kompositpartikeln mit einem Durchmesser von etwa 180 bis 240 nm. Freie Siliziumdioxidteilchen konnten praktisch nicht nachgewiesen werden.

Bei einem pH-Wert von 5 wiesen die Siliziumdioxidteilchen eine elektrophoretische Mobilität mit negativem Vorzeichen auf.

Beispiel 4

Die Arbeitsweise von Beispiel 2 wurde wiederholt mit der Ausnahme, daß beim wässrigen Reaktionsmedium ein pH-Wert von 7 eingestellt wurde und man als Polymerisationsinitiator anstelle von 0,45 g Ammoniumperoxodisulfat 0,45 g Natriumperoxodisulfat eingesetzte. Außerdem wurde die Reaktionstemperatur von 75 auf 85°C angehoben. Die Reaktionsvorlage wurde auf folgende Weise hergestellt: 60 g entionisiertes und sauerstofffreies Wasser sowie 1,5 g 1 M Salzsäure wurden vorgelegt und unter Rühren (250 Umdrehungen pro Minute) 20 g Nyacol® 2040 zugegeben. Anschließend stellte man die wässrige Phase mit 0,5 g 1 M Salzsäure auf pH 7 ein und füllte sie mit Wasser, das mit 1 M Salzsäure auf pH 7 eingestellt worden war, auf 100 g auf.

Von der erhaltenen Kompositpartikeldispersion wurde einen Feststoffgehalt von 11,2 Gew.-%, bezogen auf das Gesamtgewicht der wässrigen Kompositpartikeldispersion, bestimmt. Mittels transmissionselektronenmikroskopische Untersuchungen wurden himbeerförmige Kompositpartikel mit einem Durchmesser von etwa 150 bis 190 nm nachgewiesen. Freie Siliziumdioxidteilchen konnten praktisch nicht nachwiesen werden.

Bei einem pH-Wert von 7 wiesen die Siliziumdioxidteilchen eine elektrophoretische Mobilität mit negativem Vorzeichen auf.

Beispiel 5

Beispiel 2 wurde wiederholt mit der Ausnahme, daß anstelle von 20 g Styrol ein Monomerengemisch bestehend aus 10 g Styrol und 10 g 2-Ethylhexylacrylat und anstelle von 0,2 g CTAB 0,4 g CTAB sowie als Polymerisationsinitiator anstelle von 0,45 g Ammoniumperoxodisulfat 0,45 g Natriumperoxodisulfat eingesetzt wurden. Die Reaktionstemperatur wurde außerdem von 75 auf 85°C angehoben.

Die gebildete Kompositpartikeldispersion wies einen Feststoffgehalt von 11,8 Gew.-%, bezogen auf das Gesamtgewicht der wässrigen Kompositpartikeldispersion, auf. Mittels transmissionselektronenmikroskopischer Untersuchungen wurden himbeerförmige Kompositpartikel mit einem Durchmesser von etwa 300 nm nachgewiesen. Freie Siliziumdioxidteilchen ließen sich praktisch nicht nachweisen.

Beispiel 6

Beispiel 2 wurde wiederholt mit der Ausnahme, daß anstelle von 20 g Styrol 20 g Methylmethacrylat (MMA) und als Polymerisationsinitiator anstelle von 0,45 g Ammoniumperoxodisulfat 0,45 g Natriumperoxodisulfat eingesetzt wurden. Die Reaktionstemperatur wurde außerdem von 75 auf 85°C angehoben.

Die gebildete Kompositpartikeldispersion wies einen Feststoffgehalt von 11,2 Gew.-%, bezogen auf das Gesamtgewicht der wässrigen Kompositpartikeldispersion, auf. Himbeerförmige Kompositpartikel mit einem Durchmesser von etwa 80 bis 140 nm ließen sich durch transmissionselektronenmikroskopische Messungen nachweisen. Freie Siliziumdioxidteilchen konnten praktisch nicht nachgewiesen werden.

Beispiel 7

Beispiel 2 wurde wiederholt mit der Ausnahme, daß anstelle von 20 g Styrol ein Monomerengemisch bestehend aus 10 g MMA und 10 g n-Butylacrylat eingesetzt wurde.

Die so erhaltene Kompositpartikeldispersion wies einen Feststoffgehalt von 11,6 Gew.-%, bezogen auf das Gesamtgewicht der wässrigen Kompositpartikeldispersion, auf. Über transmissionselektronenmikroskopische Messungen konnten himbeerförmige Kompositpartikel mit einem Durchmesser von etwa 200 bis 400 nm nachgewiesen werden. Freie Siliziumdioxidteilchen wurden praktisch nicht nachgewiesen.

Beispiel 8

Unter Stickstoffatmosphäre wurden bei 20°C und 1 bar (absolut) 40 g entionisiertes und sauerstofffreies Wasser sowie 1,5 g 1 M Salzsäure in einem 500 ml Vierhalskolben vorgelegt und unter Rühren (250 Umdrehungen pro Minute) 40 g Nyacol® 2040 zugegeben. Anschließend stellte man die wässrige Phase mit 4 g 1 M Salzsäure auf pH 2,5 ein und füllte sie mit Wasser, das mit 1 M Salzsäure auf pH 2,5 eingestellt worden war, auf 100 g auf. Danach heizte man das Reaktionsgemisch auf eine Reaktionstemperatur von 75°C auf.

Parallel stellte man eine wässrige Emulsion, bestehend aus 20 g Styrol, 20 g n-Butylacrylat, 60 g entionisiertem und sauerstofffreiem Wasser sowie 0,2 g CTAB her (Zulauf 1). Eine Initiatorlösung wurde aus 0,45 g Ammoniumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 22,4 Gew.-%, bezogen auf das Gesamtgewicht der wässrigen Kompositpartikeldispersion, auf. Transmissionselektronenmikroskopische Untersuchungen belegten das Vorliegen himbeerförmiger Kompositpartikel mit einem Durchmesser von etwa 240 nm. Freie Siliziumdioxidteilchen konnten praktisch nicht nachgewiesen werden.

Beispiel 9

Unter Stickstoffatmosphäre wurden bei 20°C und 1 bar (absolut) 15 g entionisiertes und sauerstofffreies Wasser sowie 1,5 g 1 M Salzsäure in einem 500 ml Vierhalskolben vorgelegt und unter Rühren (250 Umdrehungen pro Minute) 73,5 g Nyacol® 2040 zugegeben. Anschließend stellte man die wässrige Phase mit 8,24 g 1 M Salzsäure auf pH 2,5 ein und füllte sie mit Wasser, das mit 1 M Salzsäure auf pH 2,5 eingestellt worden war, auf 100 g auf. Anschließend heizte man das Reaktionsgemisch auf eine Reaktionstemperatur von 75°C auf.

Parallel stellte man eine wässrige Emulsion, bestehend aus 34,3 g Styrol, 34,3 g n-Butylacrylat, 31,4 g entionisiertem und sauerstofffreiem Wasser sowie 0,4 g CTAB her (Zulauf 1). Eine Initiatorlösung wurde aus 1,58 g Ammoniumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Von der gebildeten Kompositpartikeldispersion wurde einen Feststoffgehalt von 40,0 Gew.-%, bezogen auf das Gesamtgewicht der wässrigen Kompositpartikeldispersion, bestimmt. Mittels transmissionselektronenmikroskopische Messungen konnten himbeerförmige Kompositpartikel mit einem Durchmesser von etwa 270 nm nachgewiesen werden. Freie Siliziumdioxidteilchen waren praktisch nicht nachweisbar.

Beispiel 10

Unter Stickstoffatmosphäre wurden bei 20°C und 1 bar (absolut) 50 g entionisiertes und sauerstofffreies Wasser sowie 1,5 g 1 M Salzsäure in einem 500 ml Vierhalskolben vorgelegt und unter Rühren (250 Umdrehungen pro Minute) 26,7 g Nyacol® 830 (mit einem Siliziumdioxidfeststoffgehalt von 30 Gew.-%) zugegeben. Anschließend stellte man die wässrige Phase mit 4,06 g 1 M Salzsäure auf pH 2,5 ein und füllte sie mit Wasser, das mit 1 M Salzsäure auf pH 2,5 eingestellt worden war, auf 100 g auf. Anschließend heizte man das Reaktionsgemisch auf eine Reaktionstemperatur von 85°C auf. Der pH-Wert dieser wässrigen Phase, gemessen bei Raumtemperatur, betrug 2,5.

Parallel stellte man eine wässrige Emulsion, bestehend aus 20 g Styrol, 80 g entionisiertem und sauerstofffreiem Wasser sowie 0,2 g CTAB her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 11,5 Gew.-%, bezogen auf das Gesamtgewicht der wässrigen Kompositpartikeldispersion, auf. Durch transmissionselektronenmikroskopische Messungen konnten himbeerförmige Kompositpartikel mit einem Durchmesser von etwa 160 nm nachgewiesen werden. Freie Siliziumdioxidteilchen ließen sich praktisch nicht nachweisen.

Die Siliziumdioxidteilchen von Nyacol® 830 wiesen bei einem pH-Wert von 2,5 eine elektrophoretische Mobilität mit negativem Vorzeichen auf.

Beispiel 11

Unter Stickstoffatmosphäre wurden bei 20°C und 1 bar (absolut) 50 g entionisiertes und sauerstofffreies Wasser sowie 1,5 g 1 M Salzsäure in einem 500 ml Vierhalskolben vorgelegt und unter Rühren (250 Umdrehungen pro Minute) 26,7 g Ludox® HS30 (mit einem Siliziumdioxidfeststoffgehalt von 30 Gew.-%) zugegeben. Anschließend stellte man die wässrige Phase mit 1,88 g 1 M Salzsäure auf pH 2,5 ein und füllte sie mit Wasser, das mit 1 M Salzsäure auf pH 2,5 eingestellt worden war, auf 100 g auf. Danach heizte man das Reaktionsgemisch auf eine Reaktionstemperatur von 85°C auf. Der pH-Wert dieser wässrigen Phase, gemessen bei Raumtemperatur, betrug 2,5.

Parallel stellte man eine wässrige Emulsion, bestehend aus 10 g Styrol, 10 g n-Butylacrylat, 80 g entionisiertem und sauerstofffreiem Wasser sowie 0,2 g CTAB her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die so zugängliche Kompositpartikeldispersion wies einen Feststoffgehalt von 11,2 Gew.-%, bezogen auf das Gesamtgewicht der wässrigen Kompositpartikeldispersion, auf. Transmissionselektronenmikroskopische Messungen belegen das Vorliegen von himbeerförmigen Kompositpartikeln mit einem Durchmesser von etwa 260 nm. Freie Siliziumdioxidteilchen waren praktisch nicht nachweisbar.

Die Siliziumdioxidteilchen von Ludox® HS30 wiesen bei einem pH-Wert von 2,5 eine elektrophoretische Mobilität mit negativem Vorzeichen auf.

Beispiel 12

Unter Stickstoffatmosphäre wurden bei 20°C und 1 bar (absolut) 60 g entionisiertes und sauerstofffreies Wasser sowie 1,5 g 1 M Salzsäure in einem 500 ml Vierhalskolben vorgelegt und unter Rühren (250 Umdrehungen pro

Minute) 20 g Nyacol® 2040 zugegeben. Anschließend stellte man die wässrige Phase mit 1,62 g 1 M Salzsäure auf pH 2,5 ein und füllte sie mit Wasser, das mit 1 M Salzsäure auf pH 2,5 eingestellt worden war, auf 100 g auf. Anschließend heizte man das Reaktionsgemisch auf eine Reaktionstemperatur von 85°C auf.

Parallel stellte man eine wässrige Emulsion, bestehend aus 20 g Styrol, 78 g entionisiertem und sauerstofffreiem Wasser sowie 2 g einer 20 Gew.%igen wässrigen Lösung des nichtionischen Emulgators Lutensol® AT18 (Marke der BASF AG, $C_{16}C_{18}$-Fettalkoholethoxilat mit 18 Ethylenoxid-Einheiten) her (Zulauf 1). Eine Initiatorlösung wurde aus 0,45 g AIBA und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 11,3 Gew.-%, bezogen auf das Gesamtgewicht der wässrigen Kompositpartikeldispersion, auf. Durch transmissionselektronenmikroskopische Messungen wurde das Vorliegen von himbeerförmigen Kompositpartikeln mit einem Durchmesser von etwa 200 nm belegt. Freie Siliziumdioxidteilchen waren praktisch nicht nachweisbar.

Beispiel 13

Unter Stickstoffatmosphäre wurden bei 20°C und 1 bar (absolut) 46,7 g entionisiertes und sauerstofffreies Wasser sowie ca. 0,02 g 1 M Natronlauge in einem 500 ml Vierhalskolben vorgelegt und unter Rühren (250 Umdrehungen pro Minute) 53,3 g Nyacol® SN15 (mit einem Zinndioxidfeststoffgehalt von 15 Gew.-%) zugegeben. Anschließend heizte man das Reaktionsgemisch auf eine Reaktionstemperatur von 85°C auf. Der pH-Wert dieser wässrigen Phase, gemessen bei Raumtemperatur, betrug 10.

Parallel stellte man eine wässrige Emulsion, bestehend aus 20 g Styrol, 1,5 g 1 M Salzsäure, 78,5 g entionisiertem und sauerstofffreiem Wasser sowie 0,2 CTAB her (Zulauf 1). Eine Initiatorlösung wurde aus 0,45 g AIBA und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 10,4 Gew.-%, bezogen auf das Gesamtgewicht der wässrigen Kompositpartikeldispersion, auf. Durch transmissionselektronenmikroskopische Messungen konnten himbeerförmige Kompositpartikel mit einem Durchmesser von etwa 50 bis 230 nm nachgewiesen werden. Freie Zinndioxidteilchen ließen sich praktisch nicht nachweisen.

Die Zinndioxidteilchen von Nyacol® SN15 wiesen bei einem pH-Wert von 10 eine elektrophoretische Mobilität mit negativem Vorzeichen auf.

Beispiel 14

Beispiel 13 wurde wiederholt mit der Ausnahme, daß anstelle von 0,2 g CTAB 0,4 g CTAB und anstelle von 0,45 g AIBA 0,45-g Natriumperoxodisulfat eingesetzt wurden.

Die so zugängliche Kompositpartikeldispersion wies einen Feststoffgehalt von 11,5 Gew.-%, bezogen auf das Gesamtgewicht der wässrigen Kompositpartikeldispersion, auf. Transmissionselektronenmikroskopische Messungen belegen das Vorliegen von himbeerförmigen Kompositpartikeln mit einem Durchmesser von etwa 130 nm. Freie Zinndioxidteilchen waren praktisch nicht nachweisbar.

Beispiel 15

Unter Stickstoffatmosphäre wurden bei 20°C und 1 bar (absolut) 73,3 g entionisiertes und sauerstofffreies Wasser sowie 0,01 g 1 M Salzsäure in einem 500 ml Vierhalskolben vorgelegt und unter Rühren (250 Umdrehungen pro Minute) 26,7 g Levasil® 200 S (mit einem Siliziumdioxidfeststoffgehalt von 30 Gew.-%) zugegeben. Anschließend heizte man das Reaktionsgemisch auf eine Reaktionstemperatur von 85°C auf. Der pH-Wert dieser wässrigen Phase, gemessen bei Raumtemperatur, betrug 3,8.

Parallel stellte man eine wässrige Emulsion, bestehend aus 20 g Styrol, 80 g entionisiertem und sauerstofffreiem Wasser sowie 2,0 g einer 20 gew.-%igen wässrigen Lösung des nichtionischen Emulgators Lutensol® AT18 her (Zulauf 1). Eine Initiatorlösung wurde aus 0,45 g Natriumperoxodisulfat und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf

von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die erhaltene Kompositpartikeldispersion wies einen Feststoffgehalt von 11,0 Gew.-%, bezogen auf das Gesamtgewicht der wässrigen Kompositpartikeldispersion, auf. Transmissionselektronenmikroskopische Messungen belegen das Vorliegen von himbeerförmigen Kompositpartikeln mit einem Durchmesser von etwa 300 bis 600 nm. Freie Siliziumdioxidteilchen waren praktisch nicht nachweisbar.

Bei einem pH-Wert von 3,8 wiesen die Siliziumdioxidteilchen von Levasil® 200 S eine elektrophoretische Mobilität mit positivem Vorzeichen auf.

Beispiel 16

Unter Stickstoffatmosphäre wurden bei 20°C und 1 bar (absolut) 60 g entionisiertes und sauerstofffreies Wasser sowie 0,01 g 1 M Salzsäure in einem 500 ml Vierhalskolben vorgelegt und unter Rühren (250 Umdrehungen pro Minute) 40 g Nyacol® CEO2 {ACT} (mit einem Cerdioxidfeststoffgehalt von 20 Gew.-%) zugegeben. Anschließend heizte man auf eine Reaktionstemperatur von 85°C auf. Der pH-Wert dieser wässrigen Phase, gemessen bei Raumtemperatur, betrug 3.

Parallel stellte man eine wässrige Emulsion, bestehend aus 20 g Styrol, 80 g entionisiertem und sauerstofffreiem Wasser sowie 0,44 g einer 45 gew.-%igen wässrigen Lösung des anionischen Dowfax® 2A1 her (Zulauf 1). Eine Initiatorlösung wurde aus 0,45 g AIBA und 45 g entionisiertem und Sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Einen Feststoffgehalt von 11,4 Gew.-%, bezogen auf das Gesamtgewicht der wässrigen Kompositpartikeldispersion, wies die so zugängliche Kompositpartikeldispersion auf. Durch transmissionselektronenmikroskopische Messungen wurden himbeerförmige Kompositpartikel mit einem Durchmesser von etwa 130 nm nachgewiesen. Freie Cerdioxidteilchen konnten praktisch nicht nachgewiesen werden.

Die Cerdioxidteilchen von Nyacol® CEO2 (ACT) wiesen bei einem pH-Wert von 3,0 eine elektrophoretische Mobilität mit positivem Vorzeichen auf.

Beispiel 17

Unter Stickstoffatmosphäre wurden bei 20°C und 1 bar (absolut) 42,9 g entionisiertes und sauerstofffreies Wasser in einem 500 ml Vierhalskolben vorgelegt und unter Rühren (250 Umdrehungen pro Minute) 57,1 g Nyacol® YTTRIA (mit einem Yttrium-(III)-oxidfeststoffgehalt von 14 Gew.-%) zugegeben. Anschließend heizte man das Reaktionsgemisch auf eine Reaktionstemperatur von 85°C auf. Der pH-Wert dieser wässrigen Phase, gemessen bei Raumtemperatur, betrug 7,2.

Parallel stellte man eine wässrige Emulsion, bestehend aus 20 g Styrol, 80 g entionisiertem und sauerstofffreiem Wasser sowie 0,44 g einer 45 gew.-%igen wässrigen Lösung des anionischen Dowfax® 2A1 her (Zulauf 1). Eine Initiatorlösung wurde aus 0,45 g AIBA und 45 g entionisiertem und sauerstofffreiem Wasser hergestellt (Zulauf 2).

Bei Reaktionstemperatur wurden dem gerührten Reaktionsmedium 5 g von Zulauf 2 zugegeben. Nach Ablauf von 5 Minuten und zeitgleich beginnend, dosierte man dem gerührten Reaktionsmedium bei Reaktionstemperatur den Zulauf 1 über 2 Stunden und den Rest von Zulauf 2 über 2,5 Stunden zu. Anschließend rührte man das Reaktionsgemisch noch 1 Stunde bei Reaktionstemperatur und kühlte dann auf Raumtemperatur ab.

Die gebildete Kompositpartikeldispersion wies einen Feststoffgehalt von 13,8 Gew.-%, bezogen auf das Gesamtgewicht der wässrigen Kompositpartikeldispersion, auf. Durch transmissionselektronenmikroskopische Messungen wurden himbeerförmige Kompositpartikel mit einem Durchmesser von etwa 60 nm nachgewiesen. Freie Yttrium-(III)-oxidteilchen ließen sich praktisch nicht nachweisen.

Die Yttrium-(III)-oxidteilchen von Nyacol® YTTRIA wiesen bei einem pH-Wert von 7,2 eine elektrophoretische Mobilität mit positivem Vorzeichen auf.

Beispiel 18

Beispiel 2 wurde wiederholt mit der Ausnahme, daß anstelle von 20 g Styrol ein Monomerengemisch bestehend aus 10 g Styrol und 10 g n-Butylacrylat eingesetzt wurden.

Die gebildete Kompositpartikeldispersion wies einen Feststoffgehalt von 11,3 Gew.-%, bezogen auf das Gesamtgewicht der wässrigen Kompositpartikeldispersion, auf. Mittels transmissionselektronenmikroskopischer Untersuchungen wurden himbeerförmige Kompositpartikel mit einem Durchmesser von etwa 180 bis 300 nm nachgewiesen. Freie Siliziumdioxidteilchen ließen sich praktisch nicht nachweisen.

Zentrifugieren der Kompositpartikeldispersion (3000 Umdrehungen pro Minute, Dauer 20 Minuten) führte zur vollständigen Sedimentation der Kompositpartikel. Das überstehende wässrige Reaktionsmedium war wasserklar. In diesem wasserklaren Reaktionsmedium konnten auch mittels transmissionselektronenmikroskopischer Untersuchungen praktisch keine freien Siliziumdioxidteilchen nachgewiesen werden. Eindampfen der wasserklaren Lösung bei 150°C bis zur Gewichtskonstanz ergab einen Trockenrückstand von 0,28 Gew.-%, bezogen auf das Gesamtgewicht der wasserklaren Lösung. (Falls die Gesamtmenge an Siliziumdioxidteilchen im Serum frei vorläge, wäre ein Trockenrückstand von 3,3 Gew.% zu erwarten. Demnach sind mindestens 92 Gew.% der Siliziumdioxidteilchen in Kompositpartikeln gebunden. Der tatsächliche Anteil der gebundenen Siliziumdioxidteilchen liegt jedoch über diesem Wert, da vernachlässigt wurde, daß im Serum neben den freien Siliziumdioxidteilchen noch Salz aus der Neutralisation der Siliziumdioxidteilchen, Emulgator und Initiatorzerfallsprodukte vorliegen, deren Mengen nicht exakt zu berechnen sind.)

Mittels einer Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175) wurde für die Kompositpartikel eine mittlere Dichte von 1,22 $g/cm^3$ ermittelt. Im Vergleich dazu beträgt die Dichte des reinen Styrol/n-Butylacrylat-Copolymers (Styrol und n-Butylacrylat im Gewichtsverhältnis 1 zu 1) lediglich 1,055 $g/cm^3$ (E. Penzel, Polyacrylates, in Ullmann's Encyclopedia of Industrial Chemistry, Vol. A 21, Seite 169).

Vergleichsbeispiel 1

Beispiel 18 wurde wiederholt mit der Ausnahme, daß anstelle von 0,2 g des kationischen Emulgators CTAB 0,44 g einer 45 gew.-%igen Lösung des anionischen Emulgators Dowfax® 2A1 eingesetzt wurden.

Das erhaltene trübe Reaktionsgemisch wurde mittels transmissionselektronenmikroskopischer Messungen untersucht. Es konnten lediglich reine Polymerpartikel und die dispergierten Siliziumdioxidteilchen gefunden werden. Himbeerförmige Kompositpartikel waren nicht nachweisbar. Durch Zentrifugieren der trüben Dispersion (3000 Umdrehungen pro Minute, Dauer 20 Minuten) konnte keine Sedimentation der dispergierten Partikel erreicht werden.

Vergleichsbeispiel 2

Beispiel 15 wurde wiederholt mit der Ausnahme, daß anstelle von 0,45 g Natriumperoxidsulfat 0,45 g AIBA eingesetzt wurden.

Das erhaltene trübe Reaktionsgemisch wurde mittels transmissionselektronenmikroskopische Messungen untersucht. Es konnten lediglich reine Polymerpartikel und die dispergierten Siliziumdioxidteilchen gefunden werden. Himbeerförmige Kompositpartikel waren nicht nachweisbar.

Vergleichsbeispiel 3

Vergleichsbeispiel 1 wurde wiederholt mit der Ausnahme, daß anstelle von 20 g Nyacol® 2040 zusätzlich 20 g entionisiertes und sauerstofffreies Wasser im Reaktionsgefäß vorgelegt wurden. Man erhielt eine stabile, milchig weiße Polymerisatdispersion, welche sich unter den oben genannten Bedingungen (3000 Umdrehungen pro Minute, Dauer 20 Minuten) nicht sedimentieren ließ.

Vergleichsbeispiel 4

Unter Rühren wurden bei Raumtemperatur innerhalb von 5 Minuten 2,0 g Nyacol® 2040 in 24,1 g der stabilen Polymerisatdispersion aus Vergleichsbeispiel 3 eingerührt, wobei eine stabile wässrige Dispersion erhalten wurde.

Vergleich der Filmeigenschaften

Exemplarische Filmeigenschaften der aus der wässrigen Kompositpartikeldispersion aus Beispiel 18 (Dispersion A) sowie den Dispersionen aus Vergleichsbeispiel 3 (Dispersion B) und Vergleichsbeispiel 4 (Dispersion C) zugänglichen Polymerfilme wurden verglichen.

a) Minimale Filmbildungstemperatur (MFT) und Glasübergangstemperatur (Tg)

Die Bestimmung der MFT erfolgte nach ISO 2115 und die Tg-Werte wurden nach DIN 53765 bestimmt. Die erhaltenen Werte sind in Tabelle 1 angegeben.

Tabelle 1:

| MFT- und Tg-Werte der Polymerfilme aus den Dispersionen A bis C | | |
|---|---|---|
| Dispersion | MFT in °C | Tg in °C |
| A | 14-15 | 21 |
| B | 16-17 | 21 |
| C | 16-17 | 23 |

b) Filmhärte

Die Dispersionen A bis C wurden mit einer 250 µm-Naßschichtdicke auf Glasplatten aufgetragen und 4 Tage bei 23°C und 50 % relativer Luftfeuchtigkeit getrocknet. Die Filmhärte wurde nach der Methode von König (DIN 53157) bestimmt. Dabei ist der Film umso härter, je höher die Dämpfungsdauer ist. Die in Tabelle 2 angegebenen Werte belegen, daß der aus der Kompositpartikeldispersion A gebildete Film die größte Härte zeigt.

Tabelle 2:

| Härte der Polymerfilme aus den Dispersionen A bis C | |
|---|---|
| Dispersion | König-Härte Dämpfungsdauer in sec |
| A | 77,2 |
| B | 34,5 |
| C | 59,2 |

c) Wasseraufnahme

Von den Dispersionen A bis C wurden Polymerfilme (4 Tage Trocknung bei 23°C und 50 % relativer Luftfeuchtigkeit) mit einem spezifischen Gewicht von 100 $mg/cm^2$ hergestellt. 2 cm x 5 cm große Filmstreifen tauchte man bei Raumtemperatur in entionisiertes Wasser. Nach einer definierten Zeit wurden die Filmstreifen aus dem Wasser genommen, mit einem trockenen Baumwolltuch getrocknet und sofort gewogen. Die sogenannte Wasseraufnahme errechnet sich nach folgender Formel:

$$\text{Wasseraufnahme} = \frac{\text{Gewicht}_{\text{naß}} - \text{Gewicht}_0}{\text{Gewicht}_0} \text{ X } 100\ \%$$

Dabei bedeutet $\text{Gewicht}_0$ das Gewicht des trockenen Films vor dem Eintauchen in das Wasser und $\text{Gewicht}_{\text{naß}}$ das Gewicht des Films der eine definierte Zeit in das Wasser getaucht war und dann mit einem trockenen Baumwolltuch getrocknet wurde. Die Wasseraufnahme der Polymerfilme aus den Dispersionen A bis C nach definierten Zeiten ist in Tabelle 3 angegeben. Dabei ist klar ersichtlich, daß der aus der Kompositpartikeldispersion A gebildete Film die geringste Wasseraufnahme zeigt.

Tabelle 3:

| Wasseraufnahme der aus den Dispersionen A bis C gebildeten Polymerfilmen | | | |
|---|---|---|---|
| | Wasseraufnahme in Gew.-% nach | | |
| Dispersion | 1 Stunde | 24 Stunden | 72 Stunden |
| A | 3,6 | 3,8 | 5,6 |
| B | 3,3 | 20,0 | 34,0 |
| C | 8,2 | 10,2 | 13,5 |

## Patentansprüche

1. Verfahren zur Herstellung einer wässrigen Dispersion von aus Polymerisat und feinteiligem anorganischen Feststoff aufgebauten Partikeln, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wässrigen Emulsionspolymerisation polymerisiert wird, **dadurch gekennzeichnet, daß**

    a) eine stabile wässrige Dispersion des wenigstens einen anorganischen Feststoffs eingesetzt wird, welche dadurch charakterisiert ist, daß sie bei einer Anfangsfeststoffkonzentration von ≥ 1 Gew.-%, bezogen auf die wässrige Dispersion des wenigstens einen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,

    b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums am Beginn der Emulsionspolymerisation entspricht, eine von Null verschiedene elektrophoretische Mobilität zeigen und

    c) die radikalerzeugende Komponente des wenigstens einen radikalischen Polymerisationsinitiators und/oder die dispergierend wirkende Komponente des wenigstens einen Dispergiermittels wenigstens eine elektrische Ladung aufweisen, deren Vorzeichen entgegengesetzt dem Vorzeichen der elektrophoretischen Mobilität der dispergierten Feststoffteilchen des wenigstens einen Feststoffs ist, das diese in einer wässrigen Standardkaliumchlorid-Lösung bei einem pH-Wert, der dem pH-Wert des wässrigen Reaktionsmediums am Beginn der Emulsionspolymerisation entspricht, aufweisen.

2. Verfahren nach Anspruch 1, **dadurch gekennzeichnet, daß** der wenigstens eine anorganische Feststoff wenigstens ein Element, ausgewählt aus der Gruppe umfassend Magnesium, Calcium, Strontium, Barium, Bor, Titan, Chrom, Eisen, Cobalt, Nickel, Kupfer, Zink, Zinn, Zirkonium, Cer, Yttrium, Aluminium, Silizium, Phosphor, Antimon und Wismut enthält.

3. Verfahren nach einem der Ansprüche 1 oder 2, **dadurch gekennzeichnet, daß** der wenigstens eine anorganische Feststoff ausgewählt ist aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinndioxid, Cerdioxid, Yttrium-(III)-oxid, Titan-dioxid, Hydroxylapatit, Zinkoxid und Zinksulfid.

4. Verfahren nach einem der Ansprüche 1 bis 3, **dadurch gekennzeichnet, daß** der wenigstens eine anorganische Feststoff in Wasser bei 20°C und 1 bar (absolut) eine Löslichkeit ≤ 1 g/l Wasser aufweist.

5. Verfahren nach einem der Ansprüche 1 bis 4, **dadurch gekennzeichnet**, das das wenigstens eine Dispergiermittel ein anionischer Emulgator ist.

6. Verfahren nach einem der Ansprüche 1 bis 4, **dadurch gekennzeichnet**, das das wenigstens eine Dispergiermittel ein kationischer Emulgator ist.

7. Verfahren nach einem der Ansprüche 1 bis 4, **dadurch gekennzeichnet**, das das wenigstens eine Dispergiermittel ein kationischer Emulgator ist.

8. Verfahren nach einem der Ansprüche 1 bis 4, **dadurch gekennzeichnet**, das das wenigstens eine Dispergiermittel ein kationisches Schutzkolloid ist.

9. Verfahren nach einem der Ansprüche 1 bis 8, **dadurch gekennzeichnet, daß** der wenigstens eine radikalische Polymerisationsinitiator ausgewählt ist aus der Gruppe umfassend Natriumperoxodisulfat, Kaliumperoxodisulfat und Ammoniumperoxodisulfat.

10. Verfahren nach einem der Ansprüche 1 bis 8, **dadurch gekennzeichnet, daß** der wenigstens eine radikalische Polymerisationsinitiator 2,2'-Azobis(amidinopropyl)dihydrochlorid ist.

**11.** Wässrige Dispersion von Kompositpartikeln, erhältlich nach einem Verfahren gemäß einem der Ansprüche 1 bis 10.

**12.** Wässrige Dispersion nach Anspruch 11, **dadurch gekennzeichnet, daß** ≥ 50 Gew.-% der feinteiligen Feststoffteilchen, bezogen auf die Gesamtmenge der in den Kompositpartikeln enthaltenen feinteiligen Feststoffteilchen, auf der Oberfläche der Polymermatrix gebunden sind.

**13.** Verwendung einer wässrigen Dispersion von Kompositpartikeln gemäß Anspruch 11 oder 12, als Klebstoff, als Bindemittel, zur Herstellung einer Schutzschicht, zur Modifizierung von Zement- und Mörtelformulierungen oder in der medizinischen Diagnostik.

**14.** Kompositpartikelpulver, erhältlich durch Trocknung einer wässrigen Dispersion von Kompositpartikeln gemäß Anspruch 11 oder 12.

## Claims

**1.** A process for preparing an aqueous dispersion of particles composed of addition polymer and finely divided inorganic solid, in which process at least one ethylenically unsaturated monomer is dispersely distributed in aqueous medium and is polymerized by the method of free-radical aqueous emulsion polymerization by means of at least one free-radical polymerization initiator in the presence of at least one dispersely distributed, finely divided inorganic solid and at least one dispersant, wherein

a) a stable aqueous dispersion of said at least one inorganic solid is used, said dispersion having the characteristic features that at an initial solids concentration of ≥ 1% by weight, based on the aqueous dispersion of said at least one solid, it still contains in dispersed form one hour after its preparation more than 90% by weight of the originally dispersed solid and its dispersed solid particles have a weight-average diameter ≤ 100 nm,

b) the dispersed particles of said at least one inorganic solid exhibit a nonzero electrophoretic mobility in an aqueous standard potassium chloride solution at a pH which corresponds to the pH of the aqueous reaction medium at the beginning of the emulsion polymerization,
and

c) the radical-generating component of said at least one free-radical polymerization initiator and/or the dispersive component of said at least one dispersant have at least one electrical charge whose sign is opposite to the sign of the electrophoretic mobility of the dispersed particles of said at least one solid as possessed by said particles in an aqueous standard potassium chloride solution at a pH which corresponds to the pH of the aqueous reaction medium at the beginning of the emulsion polymerization.

**2.** A process as claimed in claim 1, wherein said at least one inorganic solid comprises at least one element selected from the group consisting of magnesium, calcium, strontium, barium, boron, titanium, chromium, iron, cobalt, nickel, copper, zinc, tin, zirconium, cerium, yttrium, aluminum, silicon, phosphorus, antimony, and bismuth.

**3.** A process as claimed in either of claims 1 and 2, wherein said at least one inorganic solid is selected from the group consisting of silicon dioxide, aluminum oxide, hydroxyaluminum oxide, calcium carbonate, magnesium carbonate, calcium orthophosphate, magnesium orthophosphate, iron(II) oxide, iron(III) oxide, iron(II/III) oxide, tin dioxide, cerium dioxide, yttrium(III) oxide, titanium dioxide, hydroxyapatite, zinc oxide, and zinc sulfide.

**4.** A process as claimed in any of claims 1 to 3, wherein said at least one inorganic solid in water at 20°C and 1 bar (absolute) has a solubility ≤ 1 g/l water.

**5.** A process as claimed in any of claims 1 to 4, wherein said at least one dispersant is an anionic emulsifier.

**6.** A process as claimed in any of claims 1 to 4, wherein said at least one dispersant is a cationic emulsifier.

**7.** A process as claimed in any of claims 1 to 4, wherein said at least one dispersant is a cationic emulsifier.

**8.** A process as claimed in any of claims 1 to 4, wherein said at least one dispersant is a cationic protective colloid.

**9.** A process as claimed in any of claims 1 to 8, wherein said at least one free-radical polymerization initiator is selected from the group consisting of sodium peroxodisulfate, potassium peroxodisulfate, and ammonium peroxodisulfate.

**10.** A process as claimed in any of claims 1 to 8, wherein said at least one free-radical polymerization initiator is 2,2'-azobis(amidinopropyl) dihydrochloride.

**11.** An aqueous dispersion of composite particles obtainable by a process as claimed in any of claims 1 to 10.

**12.** An aqueous dispersion as claimed in claim 11, wherein ≥ 50% by weight of the finely divided solid particles, based on the overall amount of the finely divided solid particles present in the composite particles, are bound on the surface of the polymer matrix.

**13.** The use of an aqueous dispersion of composite particles, as claimed in claim 11 or 12, as an adhesive, as a binder, for producing a protective coat, for modifying cement formulations and mortar formulations, or in medical diagnostics.

**14.** A composite-particle powder obtainable by drying an aqueous dispersion of composite particles, as claimed in claim 11 or 12.

**Revendications**

**1.** Procédé de préparation d'une dispersion aqueuse de particules constituée de polymère et de substance solide minérale à fines particules, dans lequel au moins un monomère éthyléniquement insaturé est distribué de manière dispersée dans un milieu aqueux et est polymérisé au moyen d'au moins un initiateur de polymérisation radicalaire en présence d'au moins une substance solide minérale à fines particules distribuée de manière dispersée, et d'au moins un agent de dispersion, par le procédé de polymérisation radicalaire en émulsion aqueuse, **caractérisé en ce que**

a) on met en oeuvre une dispersion aqueuse stable de la au moins une substance minérale, laquelle est **caractérisée en ce que**, pour une concentration de départ de substance solide ≥ 1% en poids, par rapport à la dispersion aqueuse de la au moins une substance solide, elle contient encore, une heure après sa préparation, plus de 90% en poids de la substance solide dispersée à l'origine sous forme dispersée, et que ses particules de substance solide dispersée présentent une moyenne pondérale de diamètre ≤ 100 nm,
b) les particules dispersées de substance solide de la au moins une substance solide minérale présentent, dans une solution aqueuse standard de chlorure de potassium, et à un pH correspondant au pH du milieu réactionnel aqueux au début de la polymérisation en émulsion, une mobilité électrophorétique différente de zéro
et
c) le composant générateur de radicaux du au moins un initiateur de polymérisation radicalaire et/ou le composant à action dispersante du au moins un agent de dispersion présentent une charge électrique de signe opposé au signe de la mobilité électrophorétique des particules solides dispersées de la au moins une substance solide, que celles-ci présentent dans une solution aqueuse standard de chlorure de potassium, et à un pH correspondant au pH du milieu réactionnel aqueux au début de la polymérisation en émulsion.

**2.** Procédé selon la revendication 1, **caractérisé en ce que** la au moins une substance solide minérale contient un élément choisi dans le groupe comprenant le magnésium, le calcium, le strontium, le baryum, le bore, le titane, le chrome, le fer, le cobalt, le nickel, le cuivre, le zinc, l'étain, le zirconium, le cérium, l'yttrium, l'aluminium, le silicium, le phosphore, l'antimoine et le bismuth.

**3.** Procédé selon l'une quelconque des revendications 1 ou 2, **caractérisé en ce que** la au moins une substance solide minérale est choisie dans le groupe comprenant le dioxyde de silicium, l'oxyde d'aluminium, l'hydroxyde d'aluminium, le carbonate de calcium, le carbonate de magnésium, l'orthophosphate de calcium, l'orthophosphate de magnésium, l'oxyde de fer(II), l'oxyde de fer(III), l'oxyde de fer(II/III), le dioxyde d'étain, le dioxyde de cérium, l'oxyde d'yttrium(III), le dioxyde de titane, l'hydroxylapatite, l'oxyde de zinc et le sulfure de zinc.

**4.** Procédé selon l'une quelconque des revendications 1 à 3, **caractérisé en ce que** la au moins une substance

solide minérale présente, dans de l'eau à 20°C et sous 1 bar (absolu), une solubilité ≤ 1 g/l d'eau.

**5.** Procédé selon l'une quelconque des revendications 1 à 4, **caractérisé en ce que** le au moins un agent de dispersion est un émulsifiant anionique.

**6.** Procédé selon l'une quelconque des revendications 1 à 4, **caractérisé en ce que** le au moins un agent de dispersion est un émulsifiant cationique.

**7.** Procédé selon l'une quelconque des revendications 1 à 4, **caractérisé en ce que** le au moins un agent de dispersion est un émulsifiant cationique.

**8.** Procédé selon l'une quelconque des revendications 1 à 4, **caractérisé en ce que** le au moins un agent de dispersion est un colloïde protecteur cationique.

**9.** Procédé selon l'une quelconque des revendications 1 à 8, **caractérisé en ce que** le au moins un initiateur de polymérisation radicalaire est choisi dans le groupe comprenant le peroxodisulfate de sodium, le peroxodisulfate de potassium et le peroxodisulfate d'ammonium.

**10.** Procédé selon l'une quelconque des revendications 1 à 8, **caractérisé en ce que** le au moins un initiateur de polymérisation radicalaire est du dichlorhydrate de 2,2'-azobis(amidinopropyle).

**11.** Dispersion aqueuse de particules composites que l'on peut obtenir par un procédé selon l'une quelconque des revendications 1 à 10.

**12.** Dispersion aqueuse selon la revendication 10, **caractérise en ce que** ≥ 50% en poids des particules de substance minérale à fines particules, par rapport à la quantité totale des particules de substance minérale à fines particules contenues dans les particules composites sont liées à la surface de la matrice polymère.

**13.** Utilisation d'une dispersion aqueuse de particules composites selon la revendication 11 ou 12 comme adhésif, comme liant, pour la préparation d'une couche de protection, pour la modification de formulations de mortier ou de ciment ou en diagnostic médical.

**14.** Poudre de particules composites que l'on peut obtenir par séchage d'une dispersion aqueuse de particules composites selon la revendication 11 ou 12.